# EUROPEAN PATENT SPECIFICATION

(11) **EP 2 917 990 B1**
(45) Date of publication and mention of the grant of the patent: **12.09.2018**
(21) Application number: 13852378.2
(22) Date of filing: 06.11.2013
(51) Int. Cl.: H02J 3/00, H02J 13/00, G05F 1/66, G05B 15/02, G06Q 50/06, H02J 3/14

(54) **POWER MANAGEMENT SYSTEM**
LEISTUNGSVERWALTUNGSSYSTEM
SYSTÈME DE GESTION DE PUISSANCE

(30) Priority: 06.11.2012 US 201261723264 P
(43) Date of publication of application: 16.09.2015
(73) Proprietor: Powerhive, Inc., Oakland, California 94607 (US)
(72) Inventor: HORNOR, Christopher, N., Berkley, California 94707 (US)
(74) Representative: Potter Clarkson LLP
(86) International application number: PCT/US2013/068789
(87) International publication number: WO 2014/074626

(56) References cited:
- EP-A1- 2 503 295
- WO-A1-98/54591
- US-A1- 2007 124 253
- US-A1- 2011 218 691
- US-A1- 2012 173 252
- US-A1- 2012 215 368
- US-A1- 2012 226 605
- US-A1- 2012 239 218
- US-A1- 2012 239 219
- US-A1- 2012 260 194

## Description

This application claims priority to U.S. Provisional Patent Application No. 61/723,264 filed November 6, 2012.

### BACKGROUND

Approximately 1.3 billion people live in homes not connected to the electrical grid. This group spends US$37 billion yearly on fossil fuels to light their homes. They often resort to using expensive, dirty, and potentially dangerous kerosene to light their homes, and are typically unable to use any electrical appliances or other devices. In addition, kerosene provides low quality light and causes health problems. Typical responses to this issue include the use of small solar lanterns and phone chargers. While this can improve the situation, it would be desirable to provide more reliable electricity to these homes.

The most significant barrier to electrification in the developing world is access to capital. People at the bottom of the economic pyramid have the means and willingness to pay for electricity in small quantities. Renewable energy sources, such as solar, micro-hydro or wind have proven to be economically competitive relative to kerosene or diesel generators. However, the high upfront costs of these resources present an initial hurdle to adoption.

EP 2,503,295 A1 discloses a communication module for a point of entry electricity metering device.

US 2007/124253 discloses a system for monitoring and reporting electric power usage and demand for use in conjunction with electric power billing processes.

### SUMMARY

The present invention provides a system according to claim 1. In accordance with embodiments of the present invention, a power distribution platform is provided to deliver electrical power to end users who lack a reliable connection to the public electrical grid.

Other features and aspects of the invention will become apparent from the following detailed description, taken in conjunction with the accompanying drawings which illustrate, by way of example, the features in accordance with embodiments of the invention. The summary is not intended to limit the scope of the invention, which is defined solely by the claims.

### DESCRIPTION OF THE DRAWINGS

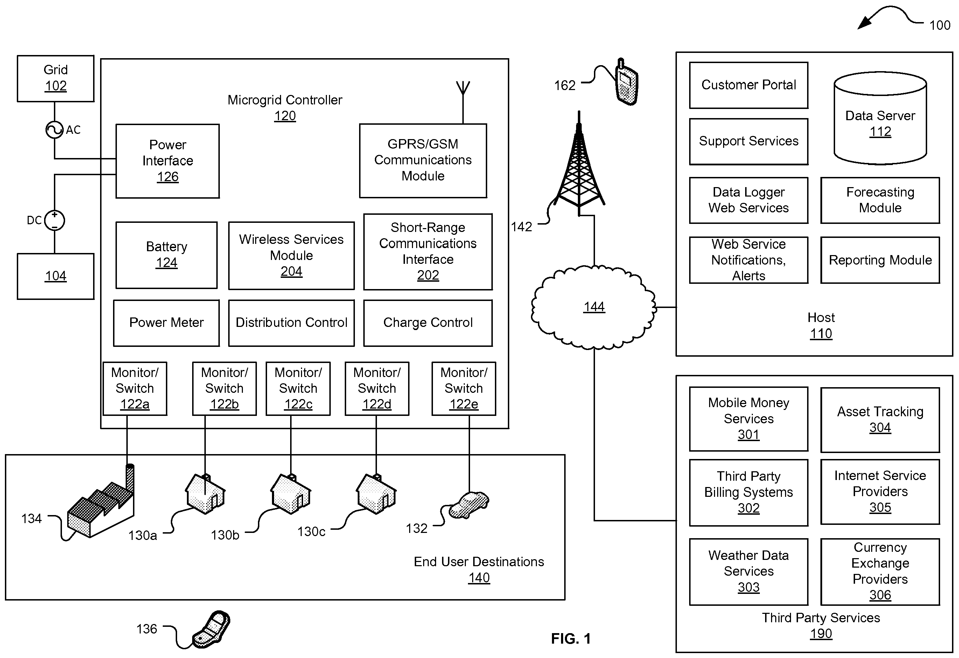

FIG. 1 illustrates a block diagram of a power distribution system in accordance with embodiments of the present invention.

### DETAILED DESCRIPTION

In the following description, reference is made to the accompanying drawings which illustrate several embodiments of the present invention. It is understood that other embodiments may be utilized and mechanical, compositional, structural, electrical, and operational changes may be made.

As used herein, the singular forms "a", "an" and "the" are intended to include the plural forms as well, unless the context indicates otherwise. It will be further understood that the terms "comprises" and/or "comprising" specify the presence of stated features, steps, operations, elements, and/or components, but do not preclude the presence or addition of one or more other features, steps, operations, elements, components, and/or groups thereof.

FIG. 1 illustrates a block diagram of a power distribution system 100, in accordance with embodiments of the present invention. The system 100 includes a microgrid controller 120 for distributing power to end users and a remote computing system (e.g., host system 110) for tracking and managing the power generating assets, including handling payments from and power delivery to the end user destinations. The host system 110 may also provide real-time data and analytics regarding power generation and usage. The host system 110 may communicate with the microgrid controller 120 via existing telecommunications infrastructure.

In accordance with embodiments of the present invention, the microgrid controller 120 is located in relatively close physical proximity to the end users and is coupled to distribution lines that carry electrical power to the end user destinations. The power may be delivered to the end user destinations via known distribution methods, such as to residential customers having standard power sockets in homes 130a-130c, commercial or industrial customers having power delivered to a business or factory 134, or to any other end user destination, such as an electric vehicle charging station 132. The microgrid controller 120 may include a power interface 126 to receive power from the standard electric grid 102, if access to the grid 102 is available. In addition to or in place of the connection to the grid 102, the microgrid controller 120 may be connected via the power interface 126 to one or more alternate power sources 104, such as a fuel cell, wind turbine, solar power system, or other energy source. The microgrid controller 120 may further include one or more energy storage devices for temporary storage of electricity received from the grid 102 or other power source 104. These energy storage devices may include both devices that store electricity such as batteries 124 and capacitive storage devices. These energy storage devices may also include devices that convert the electricity to another form of energy and then store it, such as inertial storage devices such as flywheels or pumped storage.

The microgrid controller 120 can provide a localized grouping of electricity generation, energy storage, electric power delivery, and Internet services to end users who are not otherwise connected to the power grid 102. In some embodiments, all of this functionality is provided in a single device that can be easily transported to and installed in remote locations. This can be particularly useful in regions where technically skilled personnel are unavailable and the installation, connection, and set-up of multiple components can be challenging.

In accordance with embodiments of the present invention, each end user destination 140 receives power from a dedicated switch 122a-122e, which monitors power consumption by the end user destination 140 and can initiate or terminate power delivery to the end user destination 140 based on instructions received from the host 110. The power consumption monitors may calculate power consumption based on current and voltage. The current measurement can be based on any current measurement technology, including, e.g., shunt resistor, current transformer or transducer, or Hall Effect sensor. The switch 122a-122e may deliver either AC or DC power, depending on the end user's needs. The switch 122a-122e may be any type of AC or DC switch, including electromechanical devices such as relays or contactors and solid state devices such as, e.g., transistors, silicon controlled rectifiers, and thyristors.

In accordance with embodiments of the present invention, each end user destination is associated with a communications device, such as, e.g., a mobile phone device 136, tablet computing device, or other computing device configured for user input and data communications. The user may utilize the mobile phone 136 to authorize pre-payment to the host 110 via any of a variety of known payment systems. The communications device may authorize pre-payment via any of a variety of known communications technologies, such as, e.g., a wired network connection, WLAN, or mobile data service, such as, e.g., GPRS or GSM. In some embodiments, the host 110 is configured to receive payments from a plurality of different payment systems, so that different end users on the same microgrid controller 120 may use different forms of payment.

Examples of payment systems include mobile money, such as M-Pesa, scratch card, prepaid phone card, or local agents. In other embodiments, the host 110 may accept payments via transfer of mobile phone minutes

The payment is transmitted via mobile phone tower 142 and the Internet 144 to the host 110, which may be implemented using a cloud computing system located anywhere in the world. When the pre-payment is received by the host 110, the end user destination's account is credited with the pre-payment amount in the data server 112. The host 110 then transmits this pre-payment information to the microgrid controller 120. This transmission may occur via any of a variety of known communications technologies, such as a wired network connection, WLAN, or mobile data service, such as, e.g., GPRS or GSM.

The microgrid controller 120 will monitor the pre-paid balance for each end user destination, as well as that destination's consumption of power. Once the end user destination has utilized enough electricity to have depleted the prepaid credits, the power to that end user destination will be terminated by the microgrid controller 120 using the corresponding switch 122a-122e associated with that end user. This will not affect the other end user destinations receiving power from that microgrid controller 120.

In some embodiments, the mobile device 136 associated with the end user destination 140 will receive a message alerting the user that the amount of prepaid credits is almost consumed and/or reminding the user that the amount of prepaid credits has already been depleted. This may occur once the credit balance reaches a predetermined or programmable minimum value. The message to the mobile device 136 can be delivered via any of a variety of messaging technologies, such as, e.g., Short Message Service ("SMS"), Text Messaging System ("TMS"), voice call, or other messaging service. In the developing world, the preferred messaging technology may be a text messaging service configured for use by low-cost mobile phones. The end user may then utilize the mobile device 136 to transmit additional prepaid amounts to the host 110. This may be done, e.g., by via reply message or by utilizing the same mobile payment service previously used.

In some embodiments, the end users may utilize their mobile devices 136 to check their credit balance and historical usage. This may be performed, e.g., using a browser application, a dedicated power management application, or via messaging service. For example, a user may send a message to a predefined address or containing a predefined string of text (e.g., a text message containing "BALANCE" or "HISTORY"). In response, the host 110 or microgrid controller 120 will cause a reply message to be transmitted containing the requested information.

### Dynamic Pricing

In some embodiments, the end user destinations may pay different amounts at different times for the power consumed. The price paid for power may be referred to as a tariff. For example, during peak demand periods during the day, the price per kWh is higher than during periods of low demand. In other situations, the price per kWh may vary based on other factors. For example, when the power is provided to the microgrid controller 120 from a solar power generator (e.g., a photovoltaic array), then the price per kWh is lowest during periods of high sunshine and highest at night or during inclement weather.

In some situations, the tariff varies according to a predetermined schedule based on historical power generation and consumption rates. In other situations, the tariff may vary unpredictably, such as when a weather report predicts an unexpected weather change to a period of low sunshine due to clouds, rain, fog, or snow. In some situations, the tariff may vary depending on the charge level for the battery 124 in the microgrid controller 120. In general, the tariff can be changed based upon many factors such as mix of residential and commercial loads, predicted and actual weather conditions, prices of alternative sources of electricity, amount of energy in the energy storage device, etc.

Once a future or current change in a tariff is determined, the end user mobile devices 136 may receive a message (e.g., via one or more of the above-referenced messaging services) indicating the change in tariff. If the tariff change decreases the cost of power, the end user may choose that period to engage in activities of high electricity consumption, such as, e.g., charging rechargeable devices or batteries, operating a computer, running an appliance, or operating a machine. The end user mobile device 136 may also receive messages for special promotions on tariff pricing. If the upcoming tariff change increases the cost of power, the end user may choose to avoid utilizing electricity during that period. By communicating the dynamic price changes to the end user (e.g., to the end user's mobile device for fastest message delivery), the system 100 may better manage the overall load on the system 100 and the end users may be able to optimize their consumption of electricity and maximize the value of their prepaid amounts.

In other embodiments, a rewards program may be put in place for end users whereby end users receive rewards for various types of activities. For example, the end user may receive a reward for making a prepayment of a certain amount or by utilizing power during a particular period of time.

In some embodiments, different tariffs are used for different types of end users. For example, end user destinations at residential homes 130a-130c may have a first tariff level, while industrial customers having power delivered to a business or factory 134 have a different tariff, which may be higher or lower than the residential tariff, depending on the desired outcome or utilization.

### Consumption Control

In some embodiments, the accumulated amount of energy a consumer uses in a certain period (e.g., a 12 hour, 24 hour, multi-day, one week, one month, etc. period) is limited so that each consumer is allocated a specific amount of the total energy resource, regardless of credit balance. These limits may be established based on a fixed limit (e.g., a fixed amount of kWh) or a variable limit that is a function of external factors (e.g., a percentage of the total available power). These limits are configurable and related to the tariff model a consumer subscribes to. Night time usage and instantaneous power draw limits are also configurable per consumer.

In some embodiments, the microgrid controller 120 is configured to terminate power to all (or certain predetermined) end user destinations when the state of charge (SOC) for the battery 124 reaches a defined threshold. In general, the microgrid controller 120 may terminate power to some end user destinations based on a calculation using many independent variables such as end user type, tariff, weather forecast, measures of energy storage or power production, etc.

### Local Administrator

In some embodiments, the microgrid controller 120 may include a short-range communications interface 202 (e.g., a WLAN or WiFi interface) for communicating with a computing device 162 utilized by a local administrator of the microgrid controller 120. When the local administrator is servicing the microgrid controller 120, the administrator may use a computing device 162, such as a smartphone, tablet computer, laptop computer, or personal computer, to connect with the microgrid controller 120 via the communications interface 202 and perform various administrative functions, such as viewing locally the amount of credit or historical power used per circuit without needing to access the host 110 via the Internet 144 for this information. Other administrative functions include determining when the microgrid controller 120 last synchronized data, such as customer data (e.g., prepaid credits, power consumption, tariffs, etc.) with the host 110, or other diagnostics such as the state of charge of battery 124, average temperature over time of the battery 124, etc.

### Third Party Services

In some embodiments, the host 110 may communicate with third party services 190. These third party services 190 may include, for example, weather data services 303, mobile money services 301, third party billing systems 302, asset tracking and management services 304 and other services not directly operated by the administrator of the host 110. Data derived from third party services 190 may be transmitted to microgrid controller 120 to be used, among other things, to dynamically set tariff rates, affect power interface 126, charge control, or distribution control, or inform the function of switches 122a-122e.

In some embodiments, the microgrid controller 120 may include a wireless services module 204 that provides the controller 120 with access point functionality. The wireless services module 204 is configured to retrieve data from a wide area network (e.g., the Internet) and deliver that data to one or more end user destinations, either wirelessly via the short-range communications interface 202 or via a wired connection to each of the end user destinations. As a result, the microgrid controller 120 may provide Internet connectivity for customers via, e.g., WiFi, WLAN, or other short-range networking technology. A third party Internet service provider may be used to provide this Internet connectivity to customers via the microgrid controller 120.

In some embodiments, the host 110 may interface with a currency exchange provider to permit the host 110 to receive payment from customers in a variety of currencies and be paid a single currency of choice. In some embodiments, the microgrid controller 120 may also manage the access point availability to end users using similar dynamic pricing and consumption control described above, except that the pricing and consumption may be based on bandwidth availability and data usage instead of power consumption and power availability.

### Portal Services

In some embodiments, the wireless services module 204 of the host 110 may provide additional portal services. These portal services may be delivered to all end users, or to specific end user destinations. In any case, payment for portal services may be collected explicitly from end user destinations along with payments for electricity generation, or payment may be bundled with charges for electricity.

One example of a portal service may be access to locally cached Internet data, such as Wikipedia or other similar information providers. The data from such a service would be cached locally in microgrid controller 120, and delivered to mobile communication device 136 over WiFi, WLAN, or other short-range networking technology. Another example of a portal service may include consumer finance services used finance the purchase of electricity consuming appliances such as a television or refrigerator. Yet another example may include crowd-funding providers like Kickstarter or Kiva, which may provide a mechanism to fund the installation or construction of one or more microgrid controllers 120.

In some embodiments, the microgrid controller 120 may provide a broader range of access to internet websites and services. The access to those websites and services may be real-time or may be limited to locally cached data from those websites and services. These may include, for example, social media websites such as Facebook or Twitter, or search engine websites.

In some embodiments, information regarding the power consumption, load profile or payment information (e.g., frequency of payments and amounts of money paid over time) by each end user destination 140 may be utilized when providing Internet connectivity and/or portal services to the end users at those destinations 140. For example, advertising and/or services may be targeted to an end user based on that particular end user destination's historical power consumption and/or revenue profile. The microgrid controller 120 may be particularly effective at utilizing power consumption information in targeting advertisements due to the controller's power consumption monitoring functionality.

Embodiments of the present invention may provide various advantages not provided by prior art systems. Multiple households may have power delivered by a single microgrid controller unit, and each household may have its power individually monitored and managed. In addition, end users may manage their payments via mobile payment service to get access to electricity only when needed and to optimize the times during which the electricity is consumed so as to maximize the amount of power received. Moreover, because the host 110 can be provided using a cloud computing system, it can be easily managed by administrators located remote from the end users. In addition, the host 110 may be configured to receive payments from any number of payment systems, so each end user may utilize a different payment system that is the most convenient for that individual.

The description is not intended to be exhaustive or to limit the invention to the precise form disclosed.

## Claims

1. A system (100), comprising:
a microgrid controller (120) comprising:
a power interface (126) for receiving power from a power source (102, 104);
a plurality of output interfaces (122a-122e) for delivering power to a plurality of end user destinations (140) and monitoring power consumption by each end user destination;
a control system for monitoring a prepaid balance for each of the plurality of end user destinations and controlling each of the output interfaces based on prepaid balance account information for each end user destination; and
a communications interface (136, 202) for receiving prepayment account information for each end user destination from a remote computing system (110).

2. The system of claim 1, further comprising:
a remote computing system (110) programmed to receive prepayment information for each end user destination (140) and to transmit prepayment account information for each end user destination to the microgrid controller (120).

3. The system of claim 2, wherein the remote computing system (110) is programmed to transmit tariff information to the microgrid controller (120), wherein said tariff information comprises a cost structure for power delivery for an end user destination (140).

4. The system of claim 3, wherein the remote computing system (110) is further programmed to transmit a message to a computing device associated with the end user destination (140).

5. The system of claim 4, wherein the message to the computing device associated with the end user destination (140) includes tariff information for that end user destination.

6. The system of claim 4, wherein the message to the computing device associated with the end user destination (140) includes prepayment information for that end user destination.

7. The system of claim 4, wherein the message to the computing device associated with the end user destination (140) includes an alert regarding a low prepayment balance associated with that end user destination.

8. The system of claim 4, wherein the message to the computing device associated with the end user destination (140) includes an alert regarding a zero prepayment balance associated with that end user destination.

9. The system of claim 3, wherein the remote computing system (110) is further programmed to generate different cost structures for different end user destinations (140) associated with the microgrid controller (120).

10. The system of claim 1, further comprising a wireless services module configured to retrieve data from a wide area network.

11. The system of claim 10, wherein the wireless services module (204) is further configured to communicate advertising information to each end user destination based on one or more of the following characteristics of that end user destination: power consumption, load profile, and payment history.

12. The system of claim 10, wherein the wireless services module is further configured to communicate advertising information to each end user destination in real time or on a latent basis based on one or more of the following characteristics of that end user destination: power consumption, load profile, and payment history.

## Patentansprüche

1. System (100), umfassend:
eine Mikronetzsteuereinrichtung (120) umfassend:
eine Leistungsschnittstelle (126) zum Aufnehmen von Leistung von einer Leistungsquelle (102, 104);
eine Vielzahl von Ausgabeschnittstellen (122a-122e) zum Bereitstellen von Leistung an eine Vielzahl von Endbenutzerzielen (140) und Überwachen der Leistungsaufnahme durch jedes der Endbenutzerziele;
ein Steuersystem zum Überwachen eines Vorauszahlungsguthabens für jede der Vielzahl von Endbenutzerzielen und Steuern der einzelnen Ausgabeschnittstellen auf Grundlage von Vorauszahlungsguthabenkontoinformationen für jedes der Endbenutzerziele; und
eine Kommunikationsschnittstelle (136, 202) zum Empfangen von Vorauszahlungskontoinformationen für jedes der Endbenutzerziele von einem entfernt angeordneten Rechensystem (110).

2. System nach Anspruch 1, ferner umfassend:
ein entfernt angeordnetes Rechensystem (110), das dazu programmiert ist, Vorauszahlungsinformationen für jedes der Endbenutzerziele (140) zu empfangen und Vorauszahlungskontoinformationen für jedes der Endbenutzerziele an die Mikronetzsteuereinrichtung (120) zu übertragen.

3. System nach Anspruch 2, wobei das entfernt angeordnete Rechensystem (110) dazu programmiert ist, Tarifinformationen an die Mikronetzsteuereinrichtung (120) zu übertragen, wobei die Tarifinformationen eine Kostenstruktur für die Leistungsabgabe für ein Endbenutzerziel (140) umfassen.

4. System nach Anspruch 3, wobei das entfernt angeordnete Rechensystem (110) ferner dazu programmiert ist, eine Nachricht an eine Rechenvorrichtung zu übertragen, die dem Endbenutzerziel (140) zugeordnet ist.

5. System nach Anspruch 4, wobei die Nachricht an die Rechenvorrichtung, die dem Endbenutzerziel (140) zugeordnet ist, Tarifinformationen für das Endbenutzerziel beinhaltet.

6. System nach Anspruch 4, wobei die Nachricht an die Rechenvorrichtung, die dem Endbenutzerziel (140) zugeordnet ist, Vorauszahlungsinformationen für das Endbenutzerziel beinhaltet.

7. System nach Anspruch 4, wobei die Nachricht an die Rechenvorrichtung, die dem Endbenutzerziel (140) zugeordnet ist, eine Warnung zu einem niedrigen Vorauszahlungsguthaben beinhaltet, das dem Endbenutzerziel zuordnet ist.

8. System nach Anspruch 4, wobei die Nachricht an die Rechenvorrichtung, die dem Endbenutzerziel (140) zugeordnet ist, eine Warnung zu einem Vorauszahlungsguthaben von null beinhaltet, das dem Endbenutzerziel zuordnet ist.

9. System nach Anspruch 3, wobei das entfernt angeordnete Rechensystem (110) ferner dazu programmiert ist, verschiedene Kostenstrukturen für verschiedene Endbenutzerziele (140) zu erzeugen, die der Mikronetzsteuereinrichtung (120) zugeordnet sind.

10. System nach Anspruch 1, ferner umfassend ein Funkdienstemodul, das dazu konfiguriert ist, Daten aus einem Wide Area Network *(Weitverkehrsnetz)* aufzurufen.

11. System nach Anspruch 10, wobei das Funkdienstemodul (204) ferner dazu konfiguriert ist, auf Grundlage von einer oder mehreren der folgenden Eigenschaften des Endbenutzerziels Werbeinformationen an jedes der Endbenutzerziele zu übermitteln: Leistungsaufnahme, Lastprofil und Zahlungsverlauf.

12. System nach Anspruch 10, wobei das Funkdienstemodul (204) ferner dazu konfiguriert ist, auf Grundlage von einer oder mehreren der folgenden Eigenschaften des Endbenutzerziels Werbeinformationen an jedes der Endbenutzerziele in Echtzeit oder auf latenter Basis zu übermitteln:
Leistungsaufnahme, Lastprofil und Zahlungsverlauf.

## Revendications

1. Système (100) comprenant :
un dispositif de commande de microgrille (120) comprenant :
une interface de puissance (126) permettant de recevoir de l'électricité d'une alimentation électrique (102, 104) ;
une pluralité d'interfaces de sortie (122a à 122e) permettant de fournir de l'électricité à une pluralité de destinations d'utilisateurs finaux (140) et de suivre la consommation d'électricité par chaque destination d'utilisateur final ;
un système de commande servant à suivre un équilibre prépayé pour chacune des destinations d'utilisateurs finaux de la pluralité de destinations et à commander chacune des interfaces de sortie en fonction des informations prépayées de compte d'équilibre pour chaque destination d'utilisateur final ; et
une interface de communication (136, 202) permettant de recevoir des informations de compte de prépaiement pour chaque destination d'utilisateur final à partir d'un système de calcul à distance (110).

2. Système selon la revendication 1, comprenant en outre :
un système de calcul à distance (110) programmé pour recevoir des informations de prépaiement pour chaque destination d'utilisateur final (140) et pour transmettre des informations de compte de prépaiement pour chaque destination d'utilisateur final au dispositif de commande de microgrille (120).

3. Système selon la revendication 2, dans lequel le système de calcul à distance (110) est programmé pour transmettre des informations tarifaires au dispositif de commande de microgrille (120), lesdites informations tarifaires comprenant une structure de coûts pour un approvisionnement en électricité pour une destination d'utilisateur final (140).

4. Système selon la revendication 3, dans lequel le système de calcul à distance (110) est en outre programmé pour transmettre un message à un dispositif informatique associé à la destination d'utilisateur final (140).

5. Système selon la revendication 4, dans lequel le message au dispositif de calcul associé à la destination d'utilisateur final (140) comprend des informations tarifaires pour cette destination d'utilisateur final.

6. Système selon la revendication 4, dans lequel le message destiné au dispositif de calcul associé à la destination d'utilisateur final (140) comprend des informations de prépaiement pour cette destination d'utilisateur final.

7. Système selon la revendication 4, dans lequel le message destiné au dispositif de calcul associé à la destination d'utilisateur final (140) comprend une alerte concernant un équilibre de prépaiement bas associé à cette destination d'utilisateur final.

8. Système selon la revendication 4, dans lequel le message destiné au dispositif de calcul associé à la destination d'utilisateur final (140) comprend une alerte concernant un équilibre de prépaiement nul associé à cette destination d'utilisateur final.

9. Système selon la revendication 3, dans lequel le système de calcul à distance (110) est en outre programmé pour produire différentes structures de coûts différents pour différentes destinations d'utilisateurs finaux (140) associées au dispositif de commande de microgrille (120).

10. Système selon la revendication 1, comprenant en outre un module de services sans fil configuré pour récupérer des données à partir d'un réseau étendu.

11. Système selon la revendication 10, dans le module de services sans fil (204) est en outre configuré pour communiquer des informations d'annonce à chaque destination d'utilisateur final en fonction d'au moins une des caractéristiques suivantes de cette destination d'utilisateur final : consommation d'électricité, profil de charge et historique des paiements.

12. Système selon la revendication 10, dans lequel le module de services sans fil est en outre configuré pour communiquer des informations publicitaires à chaque destination d'utilisateur final en temps réel ou selon une base latente en fonction d'au moins une des caractéristiques suivantes de cette destination d'utilisateur final :
consommation d'électricité, profil de charge et historique des paiements.
